# EUROPEAN PATENT APPLICATION

(11) **EP 3 322 020 A1**
(43) Date of publication of application: **16.05.2018**
(21) Application number: 16821634.9
(22) Date of filing: 06.07.2016
(51) Int. Cl.: H01M 8/18, H01M 8/04276, H01M 2/40

(54) **REDOX FLOW BATTERY**

(30) Priority: 06.07.2015 KR 20150095927
(71) Applicant: Lotte Chemical Corporation, Seoul, 05551 (KR)
(72) Inventor: CHOI, Wonseok, Daejeon 34010 (KR); KIM, Daesik, Daejeon 35367 (KR); JUNG, Hyunjin, Daejeon 34120 (KR); KIM, Tae-Eon, Daejeon 34120 (KR); JEONG, Jinkyo, Daejeon 34120 (KR)
(74) Representative: Delorme, Nicolas
(86) International application number: PCT/KR2016/007297
(87) International publication number: WO 2017/007228

(57) **Abstract**

A redox flow battery according to an exemplary embodiment of the present invention includes: a module which is formed by disposing unit modules, which include unit stacks for generating electric current, at lateral sides with respect to each other and electrically connecting the unit modules; electrolyte tanks which supply an electrolyte to the module and store the electrolyte discharged from the module; electrolyte inflow lines which connect the electrolyte tanks and the module and introduce the electrolyte into the module by an operation of an electrolyte pump; and electrolyte outflow lines which connect the electrolyte tanks and the module and discharge the electrolyte from the module, in which the electrolyte inflow lines are connected to a lateral side of the module at a height equal to or lower than a height of an uppermost portion of the unit module.

## Description

### [Technical Field]

The present invention relates to a redox flow battery.

### [Background Art]

As is well known, a zinc-bromine redox flow battery is a kind of flow battery and produces electricity by oxidation and reduction reactions occurring between an electrolyte and electrodes.

For example, the redox flow battery includes a stack which is made by repeatedly stacking bipolar electrode plates and membranes and sequentially stacking current collecting plates and end caps at both sides at an outermost periphery of the stacked bipolar electrode plates and the stacked membranes and is supplied with the electrolyte to generate the oxidation and reduction reactions, a pump and a tube which supply the electrolyte to the stack, electrolyte tanks which store the electrolytes discharged from the stack after the reaction inside the stack, and an electrical unit which constantly controls electric power in the stack.

In the redox flow battery, the electrolyte tanks include an anolyte tank which accommodates an anolyte including zinc, a catholyte tank which accommodates catholyte including bromine, and a two-phase electrolyte tank which accommodates two-phase catholytes. The anolyte tank and the catholyte tank are connected to each other through a first overflow tube and supply insufficient electrolytes.

The two-phase electrolyte tank separates the catholyte discharged from the stack in accordance with a difference in specific gravity, and accommodates aqueous bromine (Br) at an upper side thereof and heavy complexing bromine (Br, QBr) at a lower side thereof. The catholyte tank and the two-phase electrolyte tank are connected to each other through a second overflow tube, such that the aqueous bromine at the upper side is supplied from the two-phase electrolyte tank to the catholyte tank. In the two-phase electrolyte tank, the amount of heavy complexing bromine is increased during a charging process, and the amount of heavy complexing bromine is decreased during a discharging process. The stored heavy complexing bromine is used only during the discharging process.

Meanwhile, the stack, the pump, the tube, and the electrical unit greatly affect efficiency of the redox flow battery. If the electrolyte is not uniformly supplied to the stack, the zinc-bromine oxidation and reduction reactions are not uniformly performed in the stack. Therefore, imbalance occurs between the stacks due to increases in temperature and shunt current resistance in the stack. That is, the efficiency and the lifespan of the redox flow battery are decreased.

If a length deviation of the tube for supplying the electrolyte is great, the amount of electrolyte to be supplied into the stack becomes non-uniform, and an internal flow of the electrolyte is changed. Therefore, voltage and resistance are changed, a side reaction occurs, and energy efficiency (EE), columbic efficiency (CE), and voltage efficiency (VE) are affected. Further, a risk of a leakage in the stack and the tube may be increased due a change in internal pressure.

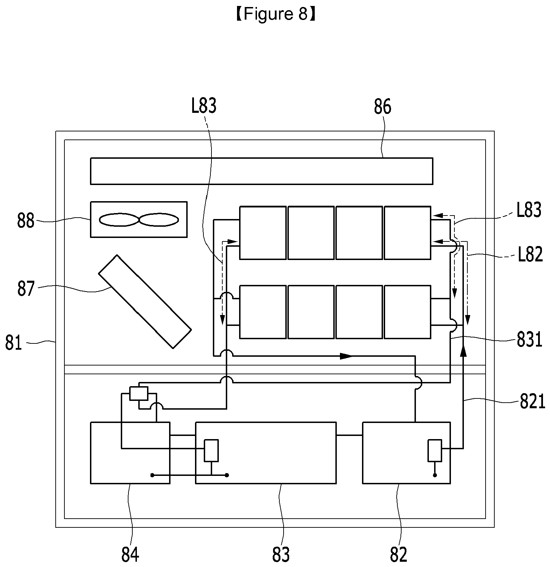

Referring to FIG. 8, a redox flow battery in the related art is provided with an anolyte tank 82, a catholyte tank 83, and a two-phase electrolyte tank 84 at a lower side of a frame 81, two-stage stacks 85 are stacked at an upper side of the frame 81, an electrical unit 86 is provided at an upper side of the stacks 85, and a heat exchanger 87 and a fan 88 are provided at a lateral side of the stack 85.

An anode tube 821 for connecting the anolyte tank 82 and the stacks 85 and cathode tubes 831 and 832 for connecting the catholyte tank 83 and the stacks 85 further include lengths L82 and L83 within a height range corresponding to the two-stage stacks 85 in order to supply the electrolyte to the two-stage stacks 85.

Uniformity of distribution of the electrolyte to the stacks 85 deteriorates because the two-stage stacks 85 are stacked and there is a height difference between the anode tube 821 and the cathode tube 831, and stability of the stacks deteriorates due to an increase in internal pressure because the lengths L82 and L83 of the tubes 821 and 831 (832) are further increased at the side for supplying the electrolyte.

Because the electrical unit 86 is disposed at the upper side of the stacks 85, an internal temperature may be increased due to heat generated in the electrical unit 86, and the electrical unit 86 is exposed to the internal heat. Heat exchange efficiency in respect to heat generated in the stacks 85 is limited because the heat exchanger 87 is disposed at the lateral side of the stack 85, and it is difficult to effectively adjust a temperature of the electrolyte because the single fan 88 is disposed at the lateral side of the stacks 85.

### [DISCLOSURE]

### [Technical Problem]

The present invention has been made in an effort to provide a redox flow battery in which an anolyte including zinc and a catholyte including bromine are uniformly distributed into unit stacks.

### [Technical Solution]

An exemplary embodiment of the present invention provides a redox flow battery including: a module which is formed by disposing unit modules, which include unit stacks for generating electric current, at lateral sides with respect to each other and electrically connecting the unit modules; electrolyte tanks which supply an electrolyte to the module and store the electrolyte discharged from the module; electrolyte inflow lines which connect the electrolyte tanks and the module and introduce the electrolyte into the module by an operation of an electrolyte pump; and electrolyte outflow lines which connect the electrolyte tanks and the module and discharge the electrolyte from the module, in which the electrolyte inflow lines are connected to a lateral side of the module at a height equal to or lower than a height of an uppermost portion of the unit module.

The electrolyte tanks may include: an anolyte tank which accommodates an anolyte to be supplied between a membrane and an anode electrode of the unit stack; a catholyte tank which accommodates a catholyte to be supplied between the membrane and a cathode electrode of the unit stack and is connected to the anolyte tank through a first overflow tube; and a two-phase electrolyte tank which accommodates two-phase catholytes discharged from between the membrane and the cathode electrode and is connected to the catholyte tank through a second overflow tube, and a lower side of the two-phase electrolyte tank and a lower side of the catholyte tank may be connected to each other through a communication tube.

The electrolyte inflow lines may include: an anolyte inflow line which connects the anolyte tank and the module; and a catholyte inflow line which connects the catholyte tank and the module, and the anolyte inflow line and the catholyte inflow line may be connected to the lateral side of the module at the height equal to or lower than the height of the uppermost portion of the unit module.

The electrolyte outflow lines may include: an anolyte outflow line which connects the module and the anolyte tank; and a catholyte outflow line which connects the module and the two-phase electrolyte tank, and the catholyte inflow line and the catholyte outflow line may be connected to the catholyte tank, the two-phase electrolyte tank, and the module via a four-way valve to selectively perform operations of introducing and discharging the catholyte.

The catholyte inflow line and the catholyte outflow line may be connected to the lateral side of the module at the height equal to or lower than the height of the uppermost portion of the unit module.

The redox flow battery according to the exemplary embodiment of the present invention may further include: a frame which accommodates the module and the electrolyte tank; a partition wall which is disposed at an upper side from one side of the frame and sets a space distinguished from the module and the electrolyte tanks; and an electrical unit which is installed in the space of the partition wall and controls the electrolyte pump.

The redox flow battery according to the exemplary embodiment of the present invention may further include: a heat exchanger which is disposed at an upper side of the module and controlled by the electrical unit; and multiple fans which are disposed at an upper side of the heat exchanger and selectively controlled by the electrical unit.

### [Advantageous Effects]

According to the exemplary embodiment of the present invention, the unit modules are disposed at the lateral sides with respect to each other and electrically connected, and the electrolyte inflow line is connected to the lateral side of the module at the height equal to or lower than the height of the uppermost portion of the unit module, and as a result, the electrolytes (e.g., the anolyte and the catholyte) may be uniformly distributed into the unit stacks.

Therefore, the zinc-bromine oxidation and reduction reactions constantly occur in the unit stack. That is, the temperature in the unit stacks and resistance of shunt current are decreased, and the balance is made between the unit stacks. As a result, the efficiency and the lifespan of the redox flow battery are increased.

### [Description of the Drawings]

FIG. 1 is a configuration view of a redox flow battery according to an exemplary embodiment of the present invention.
FIG. 2 is a perspective view illustrating a module and an electrolyte tank applied to FIG. 1.
FIG. 3 is an exploded perspective view of a unit stack applied to FIG. 2.
FIG. 4 is a cross-sectional view taken along line IV-IV of FIG. 3.
FIG. 5 is a cross-sectional view taken along line V-V in FIG. 3.
FIG. 6 is a graph for comparing energy efficiency in the related art and energy efficiency of the exemplary embodiment of the present invention.
FIG. 7 is a graph for comparing the related art and the exemplary embodiment of the present invention in terms of balance of module efficiency between stacks.
FIG. 8 is a configuration view of a redox flow battery in the related art.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

Throughout this specification and the claims, when one constituent element is referred to as being "connected to" another constituent element, one constituent element can be "directly connected" to the other constituent element, and one constituent element can also be "indirectly connected to" the other constituent element with other constituent elements disposed therebetween. In addition, unless explicitly described to the contrary, the word "comprise" and variations such as "comprises" or "comprising", will be understood to imply the inclusion of stated elements but not the exclusion of any other elements.

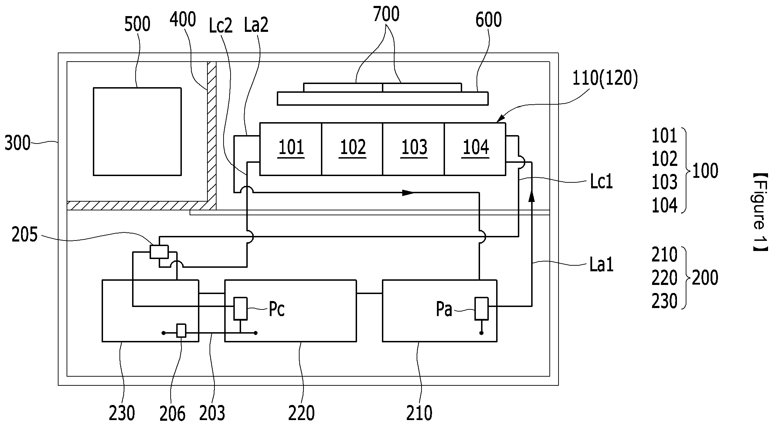

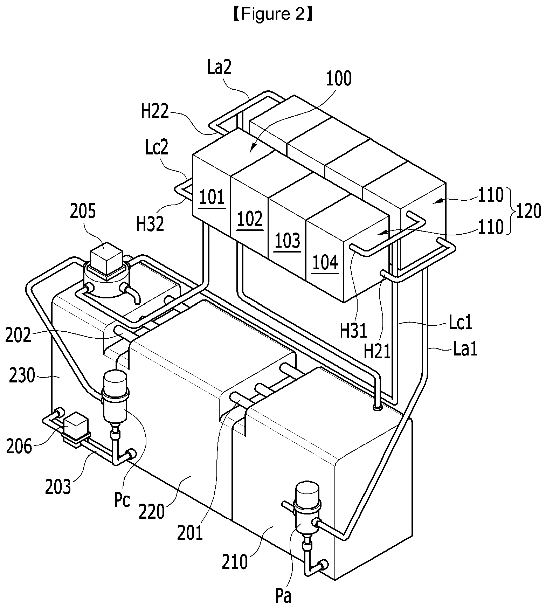

FIG. 1 is a configuration view of a redox flow battery according to an exemplary embodiment of the present invention, and FIG. 2 is a perspective view illustrating a module and an electrolyte tank applied to FIG. 1. Referring to FIGS. 1 and 2, a redox flow battery of an exemplary embodiment includes a module 120 which generates electric current, and electrolyte tanks 200 which supply electrolytes to the module 120 and store the electrolytes discharged from the module 120.

The module 120 includes multiple unit modules 110. As an example, the module 120 is formed by disposing two unit modules 110 at a lateral side with respect to each other and electrically connecting the two unit modules 110 to each other. The unit module 110 is configured to generate electric current by circulating the electrolyte, and as an example, each of the unit modules 110 includes four unit stacks 100.

For example, the electrolyte tanks 200 include an anolyte tank 210 which accommodates an anolyte including zinc, a catholyte tank 220 which accommodates a catholyte including bromine, and a two-phase electrolyte tank 230 which accommodates two-phase catholytes.

In addition, the redox flow battery of the exemplary embodiment includes electrolyte inflow lines La1 and Lc1 which connect the electrolyte tanks 200 and the module 120 so that the electrolytes are introduced into the module 120 by operations of electrolyte pumps Pa and Pc, and electrolyte outflow lines La2 and Lc2 which connect the electrolyte tanks 200 and the module 120 so that the electrolytes are discharged from the module 120.

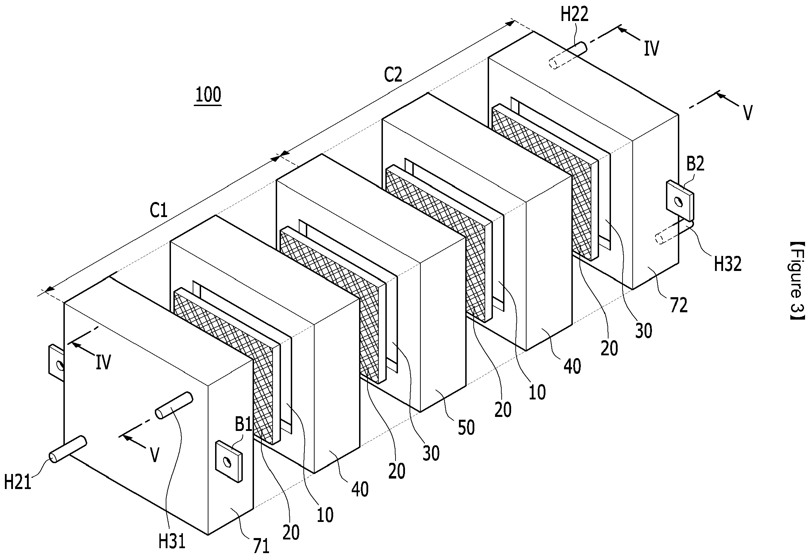

FIG. 3 is an exploded perspective view of the unit stacks applied to FIG. 2. Referring to FIGS. 2 and 3, the anolyte tank 210 supplies the anolyte between membranes 10 and anode electrodes 32 of the unit stack 100, and accommodates the anolyte discharged from between the membranes 10 and the anode electrodes 32.

The catholyte tank 220 accommodates the catholyte to be supplied between the membrane 10 and cathode electrodes 31 of the unit stack 100 and is connected to the anolyte tank 210 through a first overflow tube 201. The first overflow tube 201 enables the anolyte and catholyte tanks 210 and 220 to exchange the electrolytes.

The two-phase electrolyte tank 230 accommodates the catholytes (two-phase electrolytes including aqueous bromine and heavy complexing bromine) discharged from between the membranes 10 and the cathode electrodes 31 of the unit stack 100, and is connected to the catholyte tank 220 through a second overflow tube 202. In addition, a lower side of the two-phase electrolyte tank 230 and a lower side of the catholyte tank 220 are connected to each other through a communication tube 203.

The two-phase electrolyte tank 230 separates the catholytes discharged from between the membranes 10 and the cathode electrodes 31 into the two-phase catholytes in accordance with specific gravity, and accommodates the heavy complexing bromine at a lower side thereof and the aqueous bromine at an upper side thereof. The aqueous bromine is supplied to the catholyte tank 220 through the second overflow tube 202.

That is, the aqueous bromine at the upper side is supplied to the catholyte tank 220 through the second overflow tube 202. During a discharging process, the heavy complexing bromine at the lower side may be supplied between the membranes 10 and the cathode electrodes 31 through the communication tube 203 instead of the catholyte in the catholyte tank 220.

To this end, the electrolyte inflow lines La1 and Lc1 include an anolyte inflow line La1 which connects the anolyte tank 210 to the module 120, and a catholyte inflow line Lc1 which connects the two-phase electrolyte tank 230 to the module 120 during the discharging process or connects the catholyte tank 220 to the module 120 during a charging process.

The electrolyte outflow lines La2 and Lc2 include an anolyte outflow line La2 which connects the anolyte tank 210 to the module 120, and a catholyte outflow line Lc2 which connects the two-phase electrolyte tank 230 to the module 120.

The anolyte and catholyte inflow lines La1 and Lc1 connect electrolyte inlets H21 and H31 of the unit stack 100 to the anolyte tank 210 and the catholyte tank 220 or the two-phase electrolyte tank 230 through anolyte and catholyte pumps Pa and Pc, respectively. The anolyte and catholyte outflow lines La2 and Lc2 connect the anolyte tank 210 and the two-phase electrolyte tank 230 to electrolyte outlets H22 and H32 of the unit stack 100, respectively.

The anolyte tank 210 accommodates the anolyte including zinc, and circulates the anolyte between the membranes 10 and the anode electrodes 32 of the unit stack 100 by the operation of the anolyte pump Pa.

The catholyte tank 220 or the two-phase electrolyte tank 230 accommodates the catholyte including bromine, and circulates the catholyte between the membranes 10 and the cathode electrodes 31 of the unit stack 100 by the operation of the catholyte pump Pc.

In addition, the two-phase electrolyte tank 230 is supplied with the catholyte, which is discharged from between the membranes 10 and the cathode electrodes 31 of the unit stack 100, through the catholyte outflow line Lc2 by the operation of the catholyte pump Pc, and accommodates the heavy complexing bromine at the lower side thereof and the aqueous bromine at the upper side thereof in accordance with a difference in specific gravity.

Meanwhile, the catholyte inflow line Lc1 and the catholyte outflow line Lc2 selectively connect the catholyte tank 220 and the two-phase electrolyte tank 230 to the module 120 through a four-way valve 205, and as a result, it is possible to selectively perform the operations of introducing and discharging the catholyte to/from the module 120.

An intermittent valve 206 is provided in the communication tube 203, thereby supplying the catholyte from the two-phase electrolyte tank 230 to the module 120 by the operation of the catholyte pump Pc during the discharging process. That is, the catholyte is supplied from the catholyte tank 220 to the catholyte inflow line Lc1 when the intermittent valve 206 is closed during the charging process, and the catholyte is supplied from the two-phase electrolyte tank 230 to the catholyte inflow line Lc1 when the intermittent valve 206 is opened during the discharging process.

In addition, the unit stack 100 is electrically connected to another adjacent unit stack 100 through busbars B1 and B2. The unit module 110 and the module 120 may discharge electric current produced in the unit stacks 100 through the busbars B1 and B2, or may be connected to an external power source to charge the anolyte tank 210 and the two-phase electrolyte tank 230 with electric current.

For example, the unit stack 100 may be formed by stacking multiple unit cells C1 and C2. For convenience, in the present exemplary embodiment, the unit stack 100 formed by stacking the two unit cells C1 and C2 will be described as an example.

As illustrated in FIG. 2, the unit module 110 is formed by stacking the unit stacks 100. The module 120 is formed by disposing the unit modules 110 at lateral sides with respect to each other.

In the unit stack 100, the electrolyte inlets H21 and H31 are provided in the left unit cell C1, and the electrolyte inlets H21 and H31 are connected to the anolyte tank 210 and the catholyte tank 220 or the two-phase electrolyte tank 230, respectively, via the anolyte and catholyte pumps Pa and Pc through the anolyte and catholyte inflow lines La1 and Lc1.

In addition, the electrolyte outlets H22 and H32 are provided in the right unit cell C2, and the electrolyte outlets H22 and H32 are connected to the anolyte tank 210 and the two-phase electrolyte tank 230, respectively, through the anolyte and catholyte outflow lines La2 and Lc2.

The electrolyte inlets H21 and H31 introduce the electrolytes from the anolyte tank 210 and the catholyte tank 220 or the two-phase electrolyte tank 230 to the left unit cell C1. The electrolyte outlets H22 and H32 discharge the electrolyte, which is discharged from the right unit cell C2 via the unit stacks 100, to the anolyte tank 210 and the two-phase electrolyte tank 230.

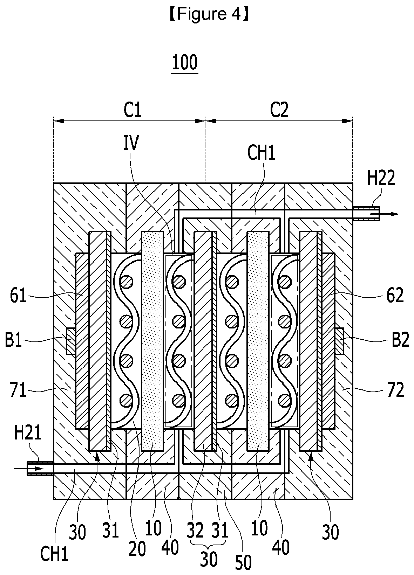

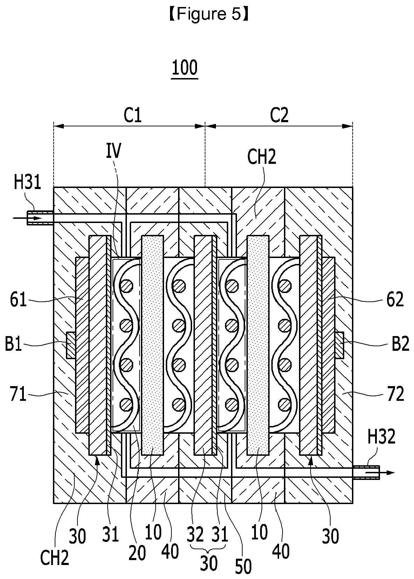

FIG. 4 is a cross-sectional view taken along line IV-IV in FIG. 3, and FIG. 5 is a cross-sectional view taken along line V-V in FIG. 3. Referring to FIGS. 3 to 5, the unit stack 100 includes the membranes 10, spacers 20, electrode plates 30, flow frames (e.g., membrane flow frames 40 and an electrode flow frame 50), first and second current collecting plates 61 and 62, and first and second end caps 71 and 72.

As an example, the unit stack 100 includes the two unit cells C1 and C2, and thus the unit stack 100 includes the single electrode flow frame 50 which is disposed at a center thereof, the two membrane flow frames 40 which are disposed at both sides of the electrode flow frame 50 so as to have a symmetric structure in left and right directions, and the two (first and second) end caps 71 and 72 which are disposed at outer peripheries of the membrane flow frames 40, respectively.

The membrane 10 is configured to allow ions to pass therethrough and coupled to the membrane flow frame 40 at a center in a thickness direction of the membrane flow frame 40. The electrode plate 30 is coupled to the electrode flow frame 50 at a center in a thickness direction of the electrode flow frame 50.

The unit stack 100 provided with the two unit cells C1 and C2 is formed by disposing the first end cap 71, the membrane flow frame 40, the electrode flow frame 50, the membrane flow frame 40, and the second end cap 72, disposing the spacers 20 between the membranes 10 and the electrode plates 30, and then joining the membrane flow frames 40, the electrode flow frame 50, and the first and second end caps 71 and 72 together.

The electrode plate 30 has an anode electrode 32 formed at one side of a portion where the two unit cells C1 and C2 are connected to each other, and a cathode electrode 31 formed at the other side thereof, such that a bipolar electrode, which connects the two unit cells C1 and C2 in series, is formed. A carbon coating layer may be formed on the cathode electrode 31.

The membrane flow frames 40, the electrode flow frame 50, and the first and second end caps 71 and 72 are attached to one another, such that internal volumes IV are set between the membranes 10 and the electrode plates 30, and first and second channels CH1 (see FIG. 4) and CH2 (see FIG. 5) for supplying the electrolyte to the internal volumes IV are provided. The first and second channels CH1 and CH2 are configured to supply the electrolyte with uniform pressure and amount at both sides of the membranes 10.

The membrane flow frames 40, the electrode flow frame 50, and the first and second end caps 71 and 72 are made of an electrically insulating material including synthetic resin and may be attached to one another by thermal bonding or vibration bonding.

The first channel CH1 connects the electrolyte inlet H21, the internal volumes IV, and the electrolyte outlet H22 and enables the anolyte to be introduced into and discharged from (after the reaction) the internal volumes IV set between the membranes 10 and the anode electrodes 32 by the operation of the anolyte pump Pa (see FIG. 4).

The second channel CH2 connects the electrolyte inlet H31, the internal volumes IV, and the electrolyte outlet H32 and enables the catholyte to be introduced into and discharged from (after the reaction) the internal volumes IV set between the membranes 10 and the cathode electrodes 31 by the operation of the catholyte pump Pc (see FIG. 5).

The anolyte produces electric current through the oxidation and reduction reactions at the anode electrode 32 in the internal volume IV, and is stored in the anolyte tank 200. The catholyte produces electric current through the oxidation and reduction reactions at the cathode electrode 31 in the internal volume IV, is stored in the two-phase electrolyte tank 230.

During the charging process, a chemical reaction such as 2Br⁻ → 2Br + 2e⁻ (Expression 1) occurs between the membrane 10 and the cathode electrode 31, such that bromine included in the catholyte is produced and stored in the two-phase electrolyte tank 230. In this case, the bromine is immediately mixed by quaternary ammonium ions in the catholyte in order to form, together with the catholyte, a high-density second phase catholyte that is immediately removed from the unit stack 100. The aqueous bromine separated from the two-phase electrolyte tank 230 overflows to the catholyte tank 220 through the second overflow tube 202.

During the charging process, a chemical reaction such as Zn²⁺ + 2e⁻ → Zn (Expression 2) occurs between the membrane 10 and the anode electrode 32, and zinc included in the anolyte is deposited on the anode electrode 32 and stored. In this case, the anolyte or the catholyte may overflow through the first overflow tube 201 between the anolyte tank 210 and the catholyte tank 220.

During the discharging process, a reaction reverse to Expression 1 occurs between the membrane 10 and the cathode electrode 31, and a reaction reverse to Expression 2 occurs between the membrane 10 and the anode electrode 32.

The first and second current collecting plates 61 and 62 are attached and electrically connected to the outermost electrode plates 30 in order to collect electric current produced at the cathode electrode 31 and the anode electrode 32 or supply electric current to the cathode electrode 31 and the anode electrode 32 from the outside.

It is necessary to discharge electric current produced in the unit stack 100, the unit module 110, and the module 120, or to connect the unit stack 100, the unit module 110, and the module 120 to the external power source to charge the anolyte tank 210 and the two-phase electrolyte tank 230 with electric current.

To this end, the first end cap 71 is integrally formed to accommodate the first current collecting plate 61 connected to the busbar B1 and the electrode plate 30 connected to the first current collecting plate 61, thereby defining an outer periphery of one side of the unit stack 100. The first end cap 71 may be formed by insert-injection molding by inserting the busbar B1, the first current collecting plate 61, and the electrode plate 30.

The second end cap 72 is integrally formed to accommodate the second current collecting plate 62 connected to the busbar B2 and the electrode plate 30 connected to the second current collecting plate 62, thereby defining an outer periphery of the other side of the unit stack 100. The second end cap 72 may be formed by insert-injection molding by inserting the busbar B2, the second current collecting plate 62, and the electrode plate 30.

The anolyte and catholyte inlets H21 and H31 are provided at one side of the first end cap 71 and connected to the first and second channels CH1 and CH2 to introduce the catholyte and the anolyte. The electrolyte outlets H22 and H32 are provided at one side of the second end cap 72 and connected to the first and second channels CH1 and CH2 to discharge the catholyte and the anolyte.

That is, the catholyte, which is discharged through the catholyte outflow line Lc2 and the four-way valve 205, is introduced into the two-phase electrolyte tank 230. Therefore, the heavy complexing bromine included in the catholyte introduced into the two-phase electrolyte tank 230 is positioned at the lower side.

Therefore, the aqueous bromine positioned at the upper side overflows from the two-phase electrolyte tank 230 to the second overflow tube 202, and the heavy complexing bromine positioned at the lower side does not overflow.

The intermittent valve 206 is closed during the charging process, such that the catholyte is supplied from the catholyte tank 220 to the catholyte inflow line Lc1. In this case, the two-phase electrolyte tank 230 accommodates the catholyte.

During the discharging process, the catholyte is supplied from the catholyte tank 220 to the catholyte inflow line Lc1. In addition, the intermittent valve 206 is opened during the discharging process, such that the catholyte including the heavy complexing bromine is supplied to the catholyte inflow line Lc1.

Referring back to FIGS. 1 and 2, the electrolyte inflow lines La1 and Lc1 are connected to the lateral side of the module 120 at a height equal to or lower than a height of an uppermost portion of the unit module 110. That is, the electrolyte inflow lines La1 and Lc1 are not higher than a maximum height of the unit module 110.

Specifically, the anolyte inflow line La1 and the catholyte inflow line Lc1 are connected to the lateral side of the module 120 at heights equal to or lower than the height of the uppermost portion of the unit module 110. That is, since the unit modules 110 are disposed at the lateral sides with respect to each other, an overall height of the module 120 is set to be equal to the height of the unit module 110.

In comparison with the case (related art) in which the unit modules are stacked vertically, in the present exemplary embodiment, the unit module 110 and the unit stack 100 are easily replaced because the unit modules 110 are disposed on the plane, and the heights of the electrolyte inflow lines La1 and Lc1 with respect to the unit modules 110 become uniform because lengths of the electrolyte inflow lines La1 and Lc1 in the height direction become short.

Therefore, the electrolyte may be uniformly distributed to the unit modules 110, and the electrolyte may be uniformly introduced into the unit stacks 100 in the unit modules 110. That is, resistance of shunt current may be decreased. In addition, since the lengths of the electrolyte inflow lines La1 and Lc1 in the height direction become short, the internal pressure is decreased, and thus stability of the unit stacks 100 may be improved.

That is, the electrolyte smoothly flows in the electrolyte inflow lines La1 and Lc1, such that resistance in the unit stacks 100 is decreased, and deposited zinc may be uniformly dissolved, and as a result, internal pressure in the unit stacks 100 may be decreased.

In addition, the catholyte inflow line Lc1 and the catholyte outflow line Lc2, which connect the catholyte tank 220 and the two-phase electrolyte tank 230 to the module 120 via the four-way valve 205, are connected to both lateral sides of the module 120 at a height equal to or lower than the height of the uppermost portion of the unit module 110.

The heavy complexing bromine (QBr), which is produced during the charging process and used during the discharging process, is heavy and has high viscosity, but the heavy complexing bromine may smoothly flow since the unit modules 110 are arranged laterally, the lengths of the electrolyte inflow lines La1 and Lc1 are short, and a length difference is eliminated.

Therefore, resistance in the module 120 is decreased, and fluidity of shunt current is excellent, such that it may not be necessary to increase a driving speed of the anolyte and catholyte pumps Pa and Pc. For this reason, pressures in the electrolyte inflow lines La1 and Lc1 and the module 120 are decreased, and a risk of a leakage of the electrolyte may be reduced.

Meanwhile, the redox flow battery of the exemplary embodiment further includes a frame 300 which accommodates the module 120 and the electrolyte tanks 200, a partition wall 400 which is disposed at an upper side from one side of the frame 300 and sets a space S distinguished from the module 120 and the electrolyte tank 200, and an electrical unit 500 which is installed in the space of the partition wall 400 and controls the electrolyte pumps Pa and Pc.

The frame 300 is configured to accommodate the electrolyte tanks 200 at a lower side thereof and accommodate the module 120 at an upper side thereof. In addition, the frame 300 defines the space S at the upper side at one upper side thereof by the partition wall 400, and the electrical unit 500 is separately provided in the space S, and as a result, it is possible to prevent heat generated in the electrical unit 500 from being transferred to the module 120.

In addition, the redox flow battery of the exemplary embodiment further includes a heat exchanger 600 which is disposed at an upper side of the module 120 and controlled by the electrical unit 500, and multiple (e.g., four) fans 700 which are provided at an upper side of the heat exchanger 600 and selectively controlled by the electrical unit 500.

The heat exchanger 600 is provided above the entire module 120, and as a result, it is possible to effectively adjust a temperature at the upper side of the module 120 through the heat exchange in respect to heat generated in the module 120.

In the case of the fans 700, multiple small-sized fans are provided, such that the fans 700 may be selectively operated in accordance with the temperature of the corresponding portions of the module 120. Since the fans 700 are individually controlled, it is possible to more uniformly adjust a temperature of the electrolyte. That is, efficiency may be improved by maintaining pH of the electrolyte and preventing the production of bromine gas.

The electrical unit 500 is provided with a battery management system (BMS) to control the anolyte and catholyte pumps Pa and Pc, thereby controlling a flow rate of the electrolyte and individually controlling the multiple fans 700.

As described above, the temperature in the module 120 is easily adjusted, and as a result, a chemical side reaction, other than the reaction between zinc and heavy complexing bromine (QBr), may be eliminated. Therefore, efficiency and durability of the redox flow battery may be improved.

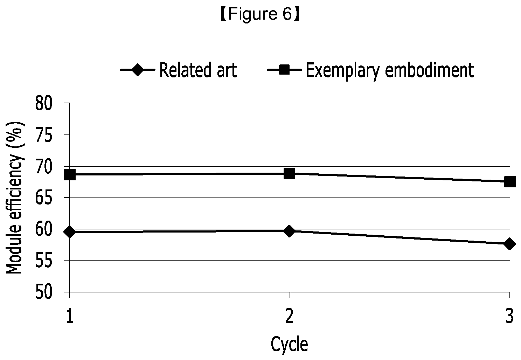

FIG. 6 is a graph for comparing energy efficiency in the related art and energy efficiency of the exemplary embodiment of the present invention. Referring to FIG. 6, experiments were conducted on a performance of the redox flow battery in the related art and a performance of the redox flow battery of the exemplary embodiment. The unit module 120 includes the four unit stacks 100, that is, the first, second, third, and fourth unit stacks 101, 102, 103, and 104.

Experimental results, as illustrated in FIG. 6, were obtained when a cycle is defined when the redox flow battery is charged in a rated electric current mode (constant current) to 20A (0% to 95% of a state of charge (SOC)) and then the electricity is discharged to 17A (95% to 0% of the SOC).

Here, the first unit stack 101 of the exemplary embodiment includes multiple unit stacks (two unit stacks including a front unit stack and a rear unit stack in FIG. 2) which are disposed at the same lateral side of the neighboring unit modules 120. A first unit stack in the related art includes multiple stacks (two stacks including an upper stack and a lower stack in FIG. 8) which are disposed on the same line in a vertical direction in FIG. 8.

First, energy efficiency (%) and voltage efficiency (%) of the stacks in the related art and the exemplary embodiment of the present invention are as shown in Tables 1 and 2.

**(Table 1)**

| Energy Efficiency (%) | | | | | | | | |
|---|---|---|---|---|---|---|---|---|
| Cycle | First Unit stack | | Second Unit Stack | | Third Unit Stack | | Fourth Unit Stack | |
| | Related Art | Exemplary Embodiment | Related Art | Exemplary Embodiment | Related Art | Exemplary Embodiment | Related Art | Exemplary Embodiment |
| 1 | 80.80 | 83.75 | 80.80 | 83.76 | 80.20 | 84.26 | 80.50 | 83.11 |
| 2 | 80.30 | 83.59 | 80.30 | 83.70 | 79.20 | 84.21 | 79.20 | 83.15 |
| 3 | 81.20 | 83.99 | 81.00 | 84.13 | 80.40 | 84.75 | 80.70 | 83.00 |

It is confirmed that the energy efficiency of the first to fourth unit stacks 101, 102, 103, and 104 of the exemplary embodiment of the present invention is generally higher than the energy efficiency in the related art.

**(Table 2)**

| Voltage Efficiency (%) | | | | | | | | |
|---|---|---|---|---|---|---|---|---|
| Cycle | First Unit Stack | | Second Unit Stack | | Third Unit Stack | | Fourth Unit Stack | |
| | Related Art | Exemplary Embodiment | Related Art | Exemplary Embodiment | Related Art | Exemplary Embodiment | Related Art | Exemplary Embodiment |
| 1 | 80.80 | 83.75 | 80.80 | 83.76 | 80.20 | 84.26 | 80.50 | 83.11 |
| 2 | 80.30 | 83.59 | 80.30 | 83.70 | 79.20 | 84.21 | 79.20 | 83.15 |
| 3 | 81.20 | 83.99 | 81.00 | 84.13 | 80.40 | 84.75 | 80.70 | 83.00 |

It is confirmed that the voltage efficiency of the first to fourth unit stacks 101, 102, 103, and 104 of the exemplary embodiment of the present invention is generally higher than the voltage efficiency in the related art.

As illustrated in FIG. 6, in the experiments during first, second, and third cycles, module efficiency in the related art is generally 60%, and module efficiency of the exemplary embodiment is about 70% which is better than in the related art.

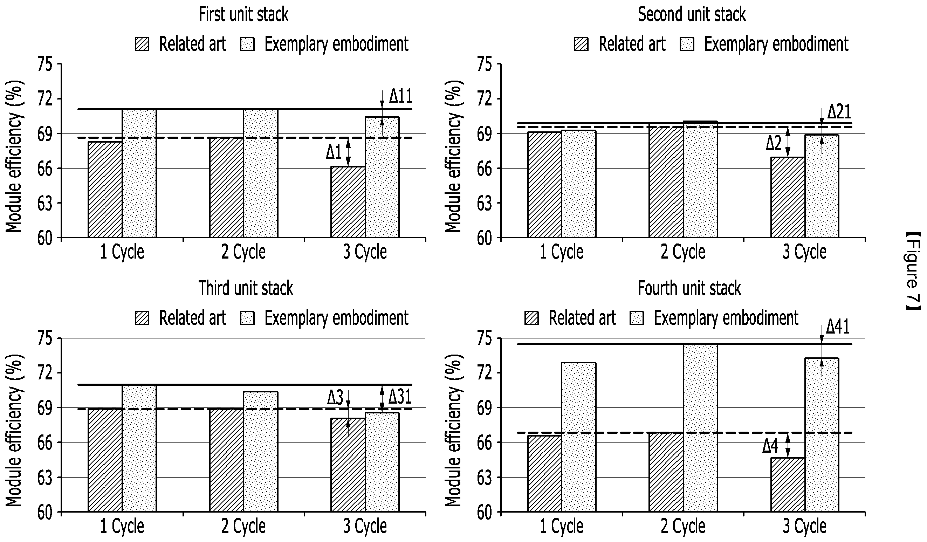

FIG. 7 is a graph for comparing the related art and the exemplary embodiment of the present invention in terms of balance of module efficiency between the stacks. Referring to FIGS. 2 and 7, in the experiments in respect to the first, second, and fourth unit stacks 101, 102, and 104 during the first, second, and third cycles, the stacks in the related art show great imbalance values Δ1, Δ2, and Δ4 of the module efficiency during the third cycle, and the stacks of the exemplary embodiment show generally uniform imbalance values Δ11, Δ21, and Δ41 of the module efficiency.

In the third unit stack 103, an imbalance value Δ31 of the module efficiency of the exemplary embodiment is greater than an imbalance value Δ3 of the module efficiency in the related art, but the exemplary embodiment shows the module efficiency higher than the module efficiency in the related art.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of symbols>**

| | |
|---|---|
| 10: Membrane | 20: Spacer |
| 30: Electrode plate | 31: Cathode electrode |
| 32: Anode electrode | |
| 40, 50: (Membrane, Electrode) Flow frame | |
| 61, 62: First and second current collecting plates | |
| 71, 72: First and second end caps | |
| 100: Unit stack | |
| 101, 102, 103, 104: First, second, third, and fourth unit stacks | |
| 110: Unit module | 120: Module |
| 200: Electrolyte tank | 201: First overflow tube |
| 202: Second overflow tube | 203: Communication tube |
| 205: Four-way valve | 206: Intermittent valve |
| 210: Anolyte tank | 220: Catholyte tank |
| 230: Two-phase electrolyte tank | 300: Frame |
| 400: Partition wall | 500: Electrical unit |
| 600: Heat exchanger | 700: Fan |
| B1, B2: Busbar | C1, C2: Unit cell |
| CH1, CH2: First and second channels | H21, H31: Electrolyte inlet |
| H22, H32: Electrolyte outlet | S: Space |
| La1 Lc1: Anolyte and catholyte inflow lines | |
| La2, Lc2: Anolyte and catholyte outflow lines | |
| Pa, Pc: Anolyte and catholyte pumps | |
| IV: Internal volume | Δ1, Δ2, Δ3, Δ4: Imbalance value |
| Δ11, Δ21, Δ31, Δ41: Imbalance value | |

## Claims

1. A redox flow battery comprising:
a module which is formed by disposing unit modules, which include unit stacks for generating electric current, at lateral sides with respect to each other and electrically connecting the unit modules;
electrolyte tanks which supply an electrolyte to the module and store the electrolyte discharged from the module;
electrolyte inflow lines which connect the electrolyte tanks and the module and introduce the electrolyte into the module by an operation of an electrolyte pump; and
electrolyte outflow lines which connect the electrolyte tanks and the module and discharge the electrolyte from the module,
wherein the electrolyte inflow lines are connected to a lateral side of the module at a height equal to or lower than a height of an uppermost portion of the unit module.

2. The redox flow battery of claim 1, wherein:
the electrolyte tanks include:
an anolyte tank which accommodates an anolyte to be supplied between a membrane and an anode electrode of the unit stack;
a catholyte tank which accommodates a catholyte to be supplied between the membrane and a cathode electrode of the unit stack and is connected to the anolyte tank through a first overflow tube; and
a two-phase electrolyte tank which accommodates two-phase catholytes discharged from between the membrane and the cathode electrode and is connected to the catholyte tank through a second overflow tube, and
a lower side of the two-phase electrolyte tank and a lower side of the catholyte tank are connected to each other through a communication tube.

3. The redox flow battery of claim 2, wherein:
the electrolyte inflow lines include:
an anolyte inflow line which connects the anolyte tank and the module; and
a catholyte inflow line which connects the catholyte tank and the module, and
the anolyte inflow line and the catholyte inflow line are connected to the lateral side of the module at the height equal to or lower than the height of the uppermost portion of the unit module.

4. The redox flow battery of claim 3, wherein:
the electrolyte outflow lines include:
an anolyte outflow line which connects the module and the anolyte tank; and
a catholyte outflow line which connects the module and the two-phase electrolyte tank, and
the catholyte inflow line and the catholyte outflow line are connected to the catholyte tank, the two-phase electrolyte tank, and the module via a four-way valve to selectively perform operations of introducing and discharging the catholyte.

5. The redox flow battery of claim 4, wherein:
the catholyte inflow line and the catholyte outflow line are connected to the lateral side of the module at the height equal to or lower than the height of the uppermost portion of the unit module.

6. The redox flow battery of claim 1, further comprising:
a frame which accommodates the module and the electrolyte tank;
a partition wall which is disposed at an upper side from one side of the frame and sets a space distinguished from the module and the electrolyte tanks; and
an electrical unit which is installed in the space of the partition wall and controls the electrolyte pump.

7. The redox flow battery of claim 6, further comprising:
a heat exchanger which is disposed at an upper side of the module and controlled by the electrical unit; and
multiple fans which are provided at an upper side of the heat exchanger and selectively controlled by the electrical unit.
